# EUROPÄISCHE PATENTSCHRIFT

(11) **EP 0 691 047 B1**
(45) Veröffentlichungstag und Bekanntmachung des Hinweises auf die Patenterteilung: **12.05.1999**
(21) Anmeldenummer: 95905546.8
(22) Anmeldetag: 17.01.1995
(51) Int. Cl.: H02K 5/14, H01R 39/40

(54) **ELEKTRISCHE KOMMUTATORMASCHINE**
COMMUTATOR-TYPE ELECTRIC MACHINE
MACHINE ELECTRIQUE A COMMUTATEUR

(30) Priorität: 27.01.1994 DE 9401357 U
(43) Veröffentlichungstag der Anmeldung: 10.01.1996
(73) Patentinhaber: BT MAGNET-TECHNOLOGIE GMBH, 44629 Herne (DE)
(72) Erfinder: CORBACH, Rainer, D-59348 Luedinghausen (DE); LATZ, Wilhelm, D-44581 Castrop-Rauxel (DE); MÜHLEMANN, Kurt, CH-4562 Biberist (CH)
(74) Vertreter: Voss, Klaus, Dipl.-Ing.
(86) Internationale Anmeldenummer: DE9500047
(87) Internationale Veröffentlichungsnummer: WO9520837

(56) Entgegenhaltungen:
- EP-A- 0 123 800
- EP-A- 0 384 686
- EP-A- 0 397 973
- DE-A- 1 463 897
- DE-A- 3 149 099
- DE-A- 3 328 683
- FR-A- 2 315 790
- US-A- 3 784 856
- PATENT ABSTRACTS OF JAPAN vol. 9, no. 136 (E-320) (1859) 12. Juni 1985 & JP,A,60 020 742 (MATSUSHITA) 2. Februar 1985

## Beschreibung

### Stand der Technik

Die Erfindung geht aus von einer Kommutatormaschine nach der Gattung der unabhängigen Ansprüche. Es ist schon eine Kommutatormaschine bekannt, bei der die Bürstenköcher über durch Durchgangsschlitze in der Bürstentragplatte steckbare Biegelappen mit der Bürstentragplatte verbunden sind, was zu einer ungenauen Plazierung der Bürsten und zu damit verbundenen Nachteilen bei der Kommutierung führt.

Mit der DE-OS 31 49 099 ist ein Bürstenhalter für eine elektrische Maschine bekannt geworden, dessen Bürstenköcher Befestigungszungen aufweisen, die in seitlichem Abstand unter Einfügen eines Zwischenstücks angeordnet sind. Dadurch wird erreicht, daß die zur Montage notwendige Kräfte über das Zwischenstück in die Befestigungszungen eingeleitet werden. In der EP-OS 397 973 ist ebenfalls ein Bürstenhalter beschrieben, bei dem die Bürstenköcher Haltezungen aufweisen, die in Aufnahmen einer Tragplatte eingreifen.

Durch die JP-A-6020742 ist eine Bürstenhalteeinrichtung bekannt geworden, bei der der Bürstenköcher mit in die Tragplatte steckbaren Füßen ausgestattet ist. Die Füße weisen ausgestanzte und ausgebogene Blechlaschen auf, die eine Verankerung des eingeführten Köchers erlauben. Im Bereich der ausgebogenen Blechlaschen weist die Tragplatte Aussparungen auf, um eine Montage zu ermöglichen.

### Vorteile der Erfindung

Die erfindungsgemäße Kommutatormaschine hat den Vorteil, daß auf einfache Weise und ohne den zusätzlichen Biegevorgang eine exakte Anordnung der Bürstenköcher erreicht wird. Es hat sich gezeigt, daß die erfindungsgemäße Maßnahme auch gute Ergebnisse hinsichtlich der Auszugsfestigkeit und der Temperaturwechselfestigkeit ergibt, wobei es besonders vorteilhaft ist, wenn die Tragplatte an ihrer die Kocher aufweisenden Stirnseite mit Aufnahmenuten für die Führungsköcher versehen ist und die Einsteckschlitze an der Grundfläche der Nut angeordnet sind.

Durch die in den Unteransprüchen aufgeführten Maßnahmen sind vorteilhafte Weiterbildungen und Verbesserungen der im Hauptanspruch angegebenen Kommutatormaschine möglich.

Wenn weiter an der einen Köcherwand ein blattfederartiges Andruckelement mit seinem einen Ende befestigt ist und das andere, freie Ende des Andrückelements vorgespannt an der ihm zugewandten Seitenfläche der Schleifbürste anliegt, ergibt sich ein besonders geräuscharmer Lauf der Kommutatormaschine, weil die Bürste spiellos in ihrem Kocher geführt ist.

### Zeichnung

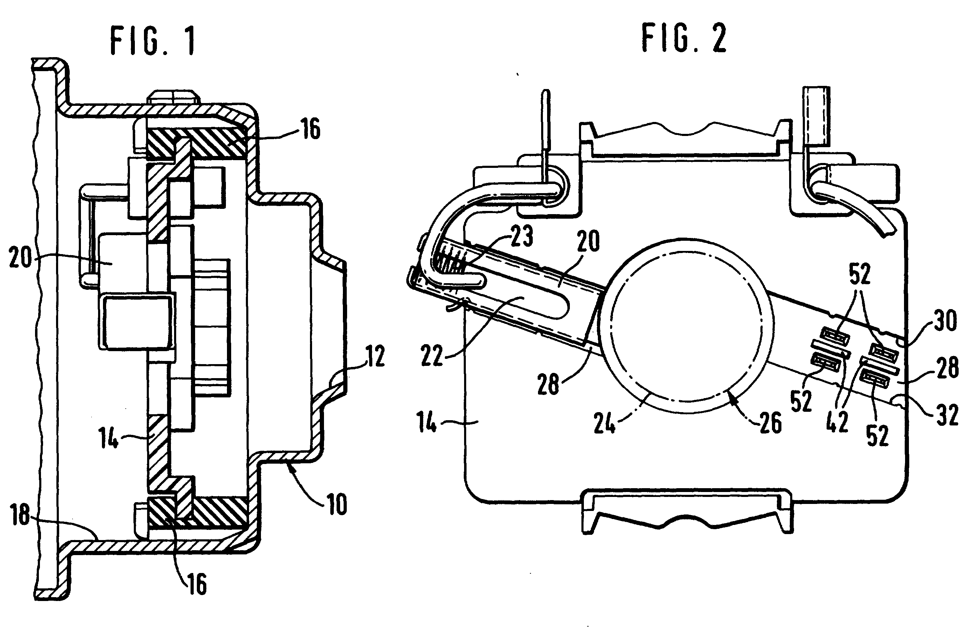

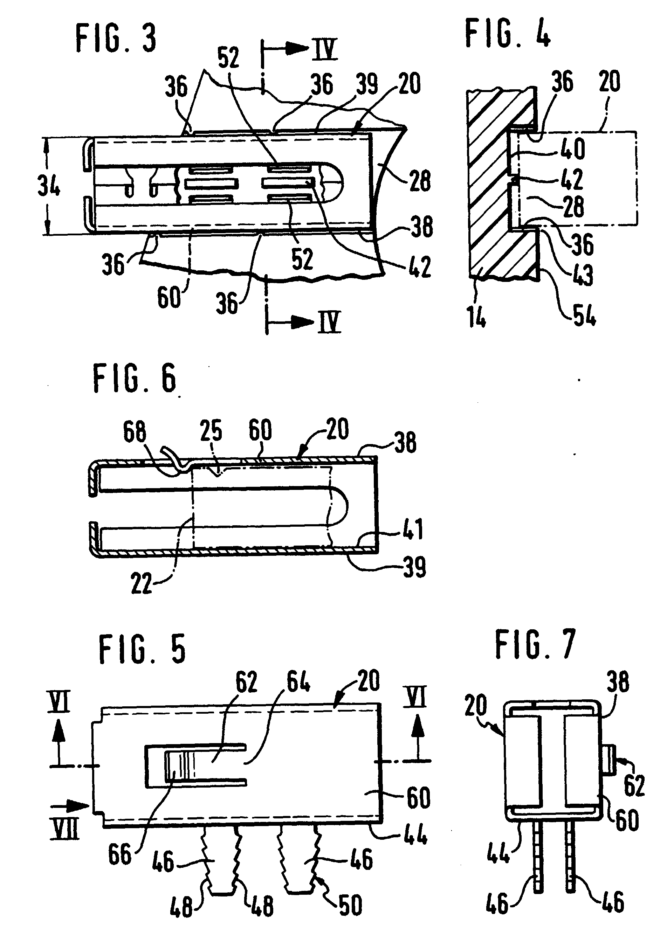

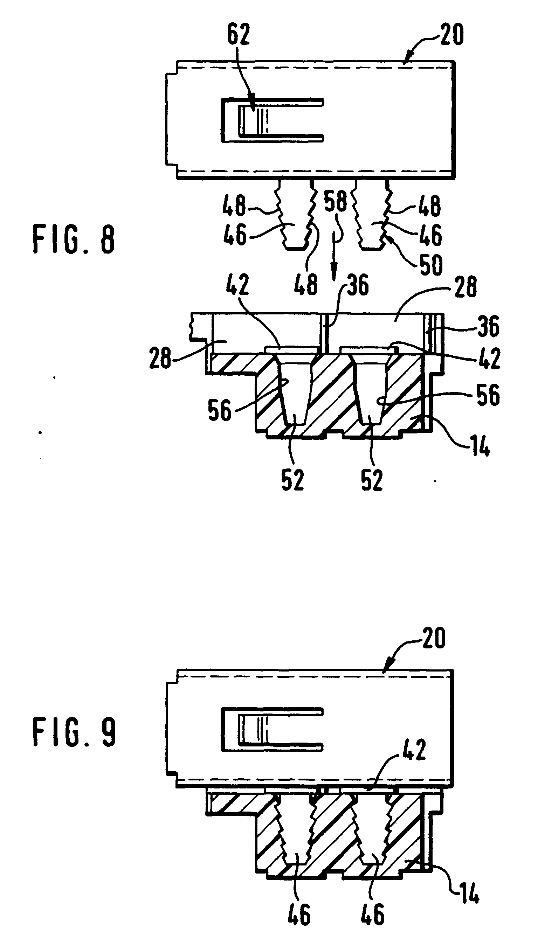

Ein Ausführungsbeispiel der Erfindung ist in der Zeichnung dargestellt und in der nachfolgenden beschreibung näher erläutert. Es zeigen Figur 1 einen Längsschnitt durch einen mit einer Bürstentragplatte versehenen Abschnitt eines Motorgehäuses, Figur 2 eine Draufsicht auf die mit nur einer Schleifbürste versehenen Bürstentragplatte gemäß Figur 1, Figur 3 eine Teilansicht der Bürstentragplatte mit einer Bürstenführung gemäß Figur 2, wobei die Schleifbürste aus der Burstenführung entfernt ist, in vergrößerter Darstellung, Figur 4 einen Schnitt entlang der Linie IV-IV durch die Bürstentragplatte gemäß Figur 3, in vergrößerter Darstellung, Figur 5 eine Seitenansicht der Bürstenführung gemäß Figur 3, Figur 6 einen Schnitt entlang der Linie VI-VI in Figur 5 durch die Bürstenführung, in welche der kollektorferne Endabschnitt einer Schleifbürste strichpunktiert eingezeichnet ist, Figur 7 eine Ansicht der Bürstenführung in Richtung des Pfeiles VII in Figur 5 gesehen, Figur 8 einen Teilschnitt der Bürstentragplatte, mit einer montagegerecht darüber angeordneten Bürstenführung und Figur 9 die mit der Bürstentragplatte verbundene Bürstenführung.

### Beschreibung des Ausführungsbeispiels

Figur 1 zeigt ein Teil eines zu einer elektrischen Kommutatormaschine gehörenden Motorgehäuses 10, das neben einer Aufnahme 12 für ein nicht dargestelltes Ankerwellenlager eine Bürstentragplatte 14 aufweist. Die im wesentlichen ringartige, die Drehachse eines zur Maschine gehörenden Kommutators 26 (Figur 2) umgebende Bürstentragplatte 14 ist über gummielastische Dämpfelemente 16 an der Innenwand 18 des Motorgehäuses 10 abgestützt. Die Bürstentragplatte 14 ist mit rohrförmigen, im Querschnitt viereckigen Bürstenköchern 20 versehen, welche zur Kommutiereinrichtung der Kommutatormaschine gehörende Schleifbürsten 22 (Figur 2) entlang der Rohrlängsachse so führen, daß diese an einer Lauffläche 24 eines in Figur 2 strichpunktiert angedeuteten Kollektor 26 durch gespannte Federn 23 belastet angelegt sind. Die aus Metall hergestellten Bürstenköcher 20 sind fest mit der Bürstentragplatte 14 verbunden. In Figur 2 ist lediglich einer der beiden Bürstenköcher 20 dargestellt. Der zweite Bürstenköcher ist nicht montiert. Es ist ersichtlich, daß sich statt dessen eine Positionierungsnut 28 in der Bürstentragplatte 14 zeigt. Diese Positionierungsnut 28 ist in Figur 4 im Querschnitt dargestellt. Weiter zeigen die Figuren 3 und 4, daß die Breite der Nuten 28 größer ist als die Breite 34 der Bürsten- oder Führungsköcher 20 und daß an den Nut-Seitenwänden 30 und 32 partielle Erhöhungen 36 angeordnet sind, an welchen die diesen zugewandten Köcherwände 38, 40 passend gehalten sind. Dies ist besonders aus Figur 4 ersichtlich, wo ein Querschnitt durch die Positionierungsnut 28 dargestellt ist, in welche ein Bürstenköcher 20 strichpunktiert eingezeichnet ist. Der Bürstenköcher 20 ist also lediglich durch die beim Ausführungsbeispiel leistenförmig ausgebildeten Erhöhungen 36 gehalten, die sich von der Grundfläche 40 der Nut 28 zum Nutrand 42 erstrecken. Weiter zeigt Figur 3 anschaulich, daß die Erhöhungen 36 an der einen Nutseitenwand 30 bezüglich der den Erhöhungen 36 an der anderen Seitenwand 32 versetzt sind. Auch zeigen die Figuren 3 und 4, daß an der Grundfläche 40 der Nut 28 zwei leistenartige Erhebungen 42 angeordnet sind. Daraus ergibt sich, daß der in der Nut 28 sitzende Bürstenköcher 20 lediglich an den Erhöhungen 36 und den Erhebungen 42 abgestützt ist, wodurch sich hervorragende Verhältnisse hinsichtlich der Schwingungsdämpfung und damit der Geräuschminderung ergeben. Aus den Figuren 5 und 7 ist zu entnehmen, daß der Bürstenköcher 20 an einer der Köcherwände 44 vier zur Wandebene aufrechte Zungen 46 aufweist, deren Seitenkanten 48 von der Köcherwand 44 aus konvergieren und mit einem Sägezahnprofil 50 versehen sind. Die Zungen 46 sind einstückig mit der Köcherwand 44 verbunden und aus der Wandebene herausgebogen. Den Zungen 46 sind in der Bürstentragplatte 14 angeordnete Einsteckschlitze 52 zugeordnet (Figuren 3 und 8). Wenn die Zungen 46 in die Einsteckschlitze 52 eingedrückt werden, sorgt eine noch näher zu beschreibende Ausgestaltung dafür, daß die Zungen 46 in den Einsteckschlitzen 52 festsitzen. Die in der einen Stirnseite 54 der Bürstentragplatte 14 - zu der auch die Grundfläche 40 der Nut 28 gehört - befindlichen Einsteckschlitze 52 dienen zur Aufnahme der Zungen 46 der Bürstenköcher 20. Das Sägezahnprofil 50 der Zungen 46 ist so auf das Profil der Einsteckschlitze 52 abgestimmt, daß die dem Sägezahnprofil 50 zugewandten Schlitzbegrenzungen 56 zumindest abschnittsweise enger sind als das Zungenprofil.

Zur Montage wird der Bürstenköcher mit seinen Einsteckzungen 46 so in die Positionierungsnut 28 der Bürstentragplatte eingebracht, daß nach Eindrücken in Richtung des Pfeiles 58 (Fig. 8) die Einsteckzungen 46 in ihre Einsteckschlitze 52 der Grundplatte 14 gelangen. Wenn die Köcherwand 44 auf der Oberseite der leistenartigen Erhebungen 42 zur Auflage kommt, verbeißt sich das widerhakenförmige Sägezahnprofil 50 der Einsteckzungen 46 so in den ihnen zugewandten Schlitzbegrenzungen 56 der Einsteckschlitze 52, daß ein sicherer, ordnungsgemäßer Sitz der Bürstenköcher gewährleistet ist. Weiter sorgt die Positionierungsnut 28 mit ihren leistenartigen Erhöhungen 36 und den leistenartigen Erhebungen 42 auch für eine ordnungsgemäße Positionierung der Bürstenköcher 20 in bezug auf die Bürstentragplatte 14.

Wie insbesondere die Figuren 5 und 6 zeigen, ist an der einen Köcherwand 60 ein blattfederartiges Andrückelement 62 für die Schleifbürste 22 angeordnet. Das Andruckelement 62 ist als ein aus der Köcherwand 60 freigeschnittener Streifen ausgebildet, dessen eines Ende 64 einstückig mit der Köcherwand 60 verbunden ist und dessen anderes, freies Ende 66 mit einer Kröpfung 68 versehen ist, die bei aus dem Köcher 20 entfernter Schleifbürste 22 in den Kocher hineinragt (Figur 6). Wenn nun eine Schleifbürste 22 in den Köcher 20 eingeführt wird, wird das Andruckelement 62 durch die gegen die Kröpfung 68 anlaufende Schleifbürste 22 nach außen gedrückt und liegt mit einer geringen Spannung an der einen Seitenfläche der Schleifbürste 22 an. Auf diese Weise erfolgt eine Belastung zur gegenüberliegenden Innenwand 41 der Führungsköcherwand 40, so daß eine ordnungsgemäße, spiellose Führung der Schleifbürste 22 in ihrem Führungsköcher 20 gewährleistet ist.

Wie die Figur 6 weiter zeigt, weist der dort strichpunktiert dargestellte, kollektorferne Endabschnitt der Schleifbürste 22 an der der Kröpfung 68 zugewandten Seitenfläche eine rillenartige Vertiefung 25 auf, in welche die Kröpfung 68 einrastet, wenn der mit dem Kollektor 26 versehene Motoranker montiert werden soll. In dieser Raststellung befindet sich die Schleifbürste 22 vollständig außerhalb des Raumes, den der Kollektor 26 bei der Montage des Ankers beansprucht. Danach wird die Rastverbindung 68, 25 durch Anheben des Andrückelements 62 gelöst und die Feder 23 legt die Schleifbürste 22 an der Lauffläche 24 des Kollektors 26 an. Gleichzeitig sorgt das Andruckelement für eine spiellose Führung der Schleifbürste 22 in dem Führungsköcher 20.

## Patentansprüche

1. Elektrische Kommutatormaschine mit einer die Drehachse des Kommutators (26) umgebenden, ringartigen Tragplatte (14) für mit dieser fest verbundene, rohrförmige, im Querschnitt viereckige Führungsköcher (20) aus Metall, in welchen zur Kommutiereinrichtung gehörende Schleifbürsten (22) entlang der Rohrlängsachse geführt, an einer Lauffläche (24) des Kommutators (26) belastet angelegt sind, wobei zur Befestigung des Köchers (20) an der Tragplatte (14) an einer der Köcherwände (44) wenigstens zwei zur Wandebene aufrechte Zungen (46) angeordnet sind, denen in der einen Stirnseite (54, 40) der Tragplatte (14) befindliche, die Zungen (46) festhaltende Einsteckschlitze (52) zugeordnet sind, dadurch gekennzeichnet, daß die Tragplatte (14) an ihrer die Köcher (20) aufweisenden Stirnseite (54) mit Aufnahmenuten (28) für die Führungsköcher (20) versehen ist, daß die Aufnahmeschlitze (52) an der Grundfläche (40) der Nut (28) angeordnet sind, daß die Breite der Nut (28) größer ist als die Breite (34) des Führungsköchers (20) und daß an den Nut-Seitenwänden (30, 32) partielle Erhöhungen (36) angeordnet sind, an welchen die diesen zugewandten Köcherwände passend gehalten sind.

2. Elektrische Kommutatormaschine mit einer die Drehachse des Kommutators (26) umgebenden, ringartigen Tragplatte (14) für mit dieser fest verbundene, rohrförmige, im Querschnitt viereckige Führungsköcher (20) aus Metall, in welchen zur Kommutiereinrichtung gehörende Schleifbürsten (22) entlang der Rohrlängsachse geführt, an einer Lauffläche (24) des Kommatators (26) belastet angelegt sind, wobei zur Befestigung des Kochers (20) an der Tragplatte (14) an einer der Köcherwände (44) wenigstens zwei zur Wandebene aufrechte Zungen (46) angeordnet sind, denen in der einen Stirnseite (54, 40) der Tragplatte (14) befindliche, die Zungen (46) festhaltende Einsteckschlitze (52) zugeordnet sind, dadurch gekennzeichnet, daß die Tragplatte (14) an ihrer die Kocher (20) aufweisenden Stirnseite (54) mit Aufnahmenuten (28) für die Führungsköcher (20) versehen ist, daß die Aufnahmeschlitze (52) an der Grundfläche (40) der Nut (28) angeordnet sind und daß an der Grundfläche (40) der Nut (28) zumindest eine, vorzugsweise leistenartige Erhebung (42) angeordnet ist.

3. Elektrische Kommutatormaschine nach Anspruch 1, dadurch gekennzeichnet, daß die Erhöhungen (36) leistenförmig ausgebildet sind und sich von der Grundfläche (40) der Nut (28) zum Nutrand (42) erstrecken.

4. Elektrische Kommutatormaschine nach einem der Ansprüche 1 oder 3, dadurch gekennzeichnet, daß die Erhöhungen (36) an der einen Nutseitenwand (30) bezüglich der Erhöhungen (36) an der anderen Nutseitenwand (32) versetzt sind.

5. Elektrische Kommutatormaschine nach einem der Ansprüche 1 bis 4, dadurch gekennzeichnet, daß die Zungen (46) mit dem Kocher (20) einstückig verbunden und aus der Wandebene herausgebogen sind.

6. Elektrische Kommutatormaschine nach einem der Ansprüche 1 bis 5, dadurch gekennzeichnet, daß die Seitenkanten (48) der Zungen (46) von der Köcherwand (44) aus konvergieren und mit einem widerhakenartigen Sägezahnprofil (50) versehen sind.

7. Elektrische Kommutatormaschine nach einem der Ansprüche 1 bis 6, dadurch gekennzeichnet, daß die Einsteckschlitze (52) zumindest abschnittsweise an ihren dem Sägezahnprofil (50) zugewandten Begrenzungen (56) enger sind als das Zungenprofil breit ist.

8. Elektrische Kommutatormaschine nach einem der Ansprüche 1 bis 7, dadurch gekennzeichnet, daß an der einen Köcherwand (60) ein blattfederartiges Andruckelement (62) mit seinem einen Ende befestigt ist und daß das andere, freie Ende (66) des Andrückelements (62) vorgespannt an der ihm zugewandten Seitenfläche der Schleifbürste (22) anliegt.

9. Elektrische Kommutatormaschine nach Anspruch 8, dadurch gekennzeichnet, daß das Andruckelement (62) ein aus der Köcherwand (60) freigeschnittener Streifen ist, dessen eines Ende (64) einstückig mit der Köcherwand (60) verbunden ist und dessen anderes, freies Ende (66) mit einer Kröpfung (68) versehen ist, die bei aus dem Köcher (20) entfernter Schleifbürste (22) in den Köcher (20) hineinragt.

10. Elektrische Kommutatormaschine nach Anspruch 9, dadurch gekennzeichnet, daß die Schleifbürste (22) an ihrem kollektorfernen Endabschnitt eine rillenartige Vertiefung (25) aufweist, in welche die Kröpfung (68) des Andrückelements (62) einrastend die Schleifbürste (22) in einer Montagestellung sichert.

## Claims

1. Electrical commutator machine having a ring-like carrying plate (14), which surrounds the axis of rotation of the commutator (26), for tubular guide casings (20) which are made of metal, have a square cross section, are permanently connected to said carrying plate and in which brushes (22) belonging to the commutation device are guided along the longitudinal axis of the tube and are placed under load on a contact face (24) of the commutator (26), in order to secure the casing (20) on the carrying plate (14), at least two tongues (46) which are upright with respect to the wall plane being arranged on one of the casing walls (44), to which tongues there are assigned insertion slits (52) which are located in the one end (54, 40) of the carrying plate (14) and detain the tongues (46), characterized in that the carrying plate (14) is provided on its end (54) having the casings (20) with accommodating slots (28) for the guide casings (20), in that the accommodating slits (52) are arranged on the base area (40) of the slot (28), in that the width of the slot (28) is greater than the width (34) of the guide casing (20), and in that there are arranged on the slot side walls (30, 32) partial raised parts (36), on which the casing walls facing them are held in a fitting manner.

2. Electrical commutator machine having a ring-like carrying plate (14), which surrounds the axis of rotation of the commutator (26), for tubular guide casings (20) which are made of metal, have a square cross section, are permanently connected to said carrying plate and in which brushes (22) belonging to the commutation device are guided along the longitudinal axis of the tube and are placed under load on a contact face (24) of the commutator (26), in order to secure the casing (20) on the carrying plate (14), at least two tongues (46) which are upright with respect to the wall plane being arranged on one of the casing walls (44), to which tongues there are assigned insertion slits (52) which are located in the one end (54, 40) of the carrying plate (14) and detain the tongues (46), characterized in that the carrying plate (14) is provided on its end (54) having the casings (20) with accommodating slots (28) for the guide casings (20), in that the accommodating slits (52) are arranged on the base area (40) of the slot (28), and in that at least one, preferably strip-like, elevation (42) is arranged on the base area (40) of the slot (28).

3. Electrical commutator machine according to Claim 1, characterized in that the raised parts (36) are designed as strips and extend from the base area (40) of the slot (28) to the slot edge (42).

4. Electrical commutator machine according to either of Claims 1 or 3, characterized in that the raised parts (36) on the one slot side wall (30) are offset with regard to the raised parts (36) on the other slot side wall (32).

5. Electrical commutator machine according to one of Claim 1 to 4, characterized in that the tongues (46) are integrally connected to the casing (20) and are bent out from the wall plane.

6. Electrical commutator machine according to one of Claims 1 to 5, characterized in that the side edges (48) of the tongues (46) converge from the casing wall (44) and are provided with a barb-like sawtooth profile (50).

7. Electrical commutator machine according to one of Claims 1 to 6, characterized in that the boundaries (56), facing the sawtooth profile (50), of the insertion slits (52) are narrower, at least in sections, than the width of the tongue profile.

8. Electrical commutator machine according to one of Claims 1 to 7, characterized in that a leaf spring-like press-on element (62) is secured by its one end on the one casing wall (60), and in that the other, free end (66) of the press-on element (62) bears with prestress on that side face of the brush (22) which faces it.

9. Electrical commutator machine according to Claim 8, characterized in that the press-on element (62) is a strip which is cut free from the casing wall (60), the one end (64) of which is integrally connected to the casing wall (60) and the other, free end (66) of which is provided with an offset (68) which projects into the casing (20) when the brush (22) is removed from the casing (20).

10. Electrical commutator machine according to Claim 9, characterized in that the brush (22) has a groove-like depression (25) on its end section remote from the commutator, into which depression the offset (68) of the press-on element (62) latches into place and secures the brush (22) in a mounting position.

## Revendications

1. Machine électrique à commutateur comportant une plaque de support (14), annulaire, entourant l'axe de rotation du commutateur (26) pour des gaines de guidage (20), tubulaires, de section carrée, reliées solidairement à la plaque, ces gaines en métal guidant, le long de leur axe, les balais de contact (22) faisant partie de l'installation de commutation, ces balais étant appliqués en charge contre une surface de circulation (24) du commutateur (26) et pour fixer la gaine de guidage (20) sur la plaque de support (14), l'une des parois (44) de la gaine comporte au moins deux languettes (46) dépassant du plan de la paroi et auxquelles sont associées des fentes d'engagement (52) dans l'une des faces frontales (54, 40) de la plaque de support (14) pour retenir les languettes (46),
caractérisée en ce que
- sur sa face frontale (54) portant les gaines de guidage (20), la plaque de support (14) est munie de rainures de réception (28) pour les gaines de guidage (20) et les fentes (52) de réception prévues dans la surface de base (40) de la rainure (28) sont telles que la largeur de la rainure (28) est supérieure à la largeur (34) de la gaine de guidage (20) et
- les parois latérales (30, 32) de la rainure comportent des bossages partiels (36) qui retiennent de manière ajustée les parois de gaines tournées vers ces bossages.

2. Machine électrique à commutateur comportant une plaque de support (14) annulaire, entourant l'axe de rotation du commutateur (26) pour des gaines de guidage de balai (20), de forme tubulaire, de section carrée, reliées solidairement à cette plaque, ces gaines étant en métal, et servant à guider, le long de leur axe, les balais de contact (22) appartenant à l'installation de commutation, ces balais étant appliqués contre la surface de circulation (24) du commutateur (26) en étant chargés et pour fixer une gaine de guidage (20) sur la plaque de support (14), l'une des parois (44) de la gaine comporte au moins deux languettes (46) en saillie par rapport au plan de la paroi et à ces languettes sont associées des fentes d'enfichage (52) prévues dans une face frontale (54, 40) de la plaque de support (14) pour retenir les languettes (46),
caractérisée en ce que
- la plaque de support (14) comporte, sur sa face frontale (54) les gaines de guidage (20), des rainures de réception (28) pour les gaines de guidage (20),
- les fentes de réception (52) étant prévues dans la surface du fond (40) de chaque rainure (28) et en ce que la surface de base (40) de la rainure (28) comporte au moins un bossage (42), de préférence en forme de barrette.

3. Machine électrique à commutateur selon la revendication 1,
caractérisée en ce que
les bossages (36) sont en forme de barrettes et sont dirigés de la surface de base (40) de la rainure (28) vers le bord (42) de la rainure.

4. Machine électrique selon l'une des revendications 1 ou 3,
caractérisée en ce que
les bossages (36) sont décalés sur une paroi latérale de rainure (30) par rapport aux bossages (36) de l'autre paroi latérale de rainure (32).

5. Machine électrique selon l'une des revendications 1 à 4,
caractérisée en ce que
les languettes (46) font corps avec la gaine de guidage (20) et sont pliées à partir du plan de la paroi.

6. Machine électrique selon l'une des revendications 1 à 5,
caractérisée en ce que
les arêtes latérales (48) des languettes (46) sont munies d'un profil en dents de scie (50) à forme de harpon, convergeant à partir de la paroi (44) de la gaine de guidage.

7. Machine électrique selon l'une des revendications 1 à 6,
caractérisée en ce que
les fentes d'enfichage (52) ont, au moins par segment, des parois (56) tournées vers le profil en dents de scie (50) qui sont plus étroites que le profil en dents de scie.

8. Machine électrique selon l'une des revendications 1 à 7,
caractérisée en ce que
l'une des parois de gaine (60) porte un élément de pression (62) en forme de ressort-lame fixé par une extrémité et l'autre extrémité libre (66) de l'élément de pression (62) est appliquée avec précontrainte contre la surface latérale correspondante du balai de contact (22).

9. Machine électrique à commutateur selon la revendication 8,
caractérisée en ce que
l'élément de pression (62) est une bande dégagée par découpe de la paroi (60) de la gaine de guidage et dont une extrémité (64) reste reliée à la paroi (60) de la gaine et dont l'autre extrémité (66), libre, étant munie d'une partie pliée (68) venant en saillie dans la gaine de guidage (20) lorsque le balai de contact (22) est enlevé de la gaine (20).

10. Machine électrique à commutateur selon la revendication 9,
caractérisée en ce que
le balai (22) comporte, au niveau de son segment d'extrémité éloigné du collecteur, une cavité en forme de rainure (25) dans laquelle s'accroche la partie pliée (68) de l'élément de pression (62) pour retenir le balai de contact (22) dans une position de montage.
